(19) Europäisches Patentamt
European Patent Office
Office européen des brevets

(11) Numéro de publication: **0 208 591**
**A1**

(12) # DEMANDE DE BREVET EUROPEEN

(21) Numéro de dépôt: 86401358.6

(22) Date de dépôt: 20.06.86

(51) Int.Cl.⁴: G 01 N 27/12

(30) Priorité: 21.06.85 FR 8509440

(43) Date de publication de la demande:
14.01.87 Bulletin 87/3

(84) Etats contractants désignés:
DE GB IT SE

(71) Demandeur: UNIVERSITE DE TOURS
3 rue des Tanneurs
F-37041 Tours Cédex(FR)

(72) Inventeur: Loup, Jean-Pierre
8 rue Lakanal
F-37000 Tours(FR)

(72) Inventeur: Lecomte, Jacques
8 Impasse de Chérizy
F-37300 Joue Les Tours(FR)

(74) Mandataire: Bouju, André
Cabinet Bouju 38 avenue de la Grande Armée
F-75017 Paris(FR)

(54) **Sonde à oxygène à résistance d'oxyde de cérium compensé.**

(57) La sonde pour mesurer la teneur en oxygène d'un gaz comprend au moins une pièce d'oxyde de cérium (4,5) et des moyens pour mesurer la conductibilité ou la résistance de cette pièce.

Cet oxyde de cérium de pureté commerciale courante renferme au moins un cation d'un élément présentant un nombre d'oxydation supérieur à 4 et soluble dans l'oxyde de cérium, la concentration de ce cation étant suffisante pour que la conduction de la couche soit essentiellement électronique et fonction de la pression partielle de l'oxygène, cette concentration ne dépassant pas un certain seuil au-delà duquel la concentration des électrons mis en jeu lors de la conduction est égale ou proportionnelle à celle desdits cations et indépendante de la pression d'oxygène.

Utilisation notamment pour détecter la pression partielle d'oxygène dans les gaz d'échappement des moteurs d'automobiles.

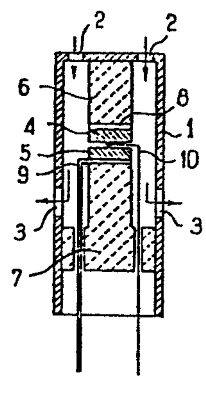


FIG. 3

EP 0 208 591 A1

La présente invention concerne une sonde pour mesurer la teneur en oxygène d'un gaz.

De telles sondes sont appelées communément sondes à oxygène.

Une sonde à oxygène permet de détecter une pression partielle d'oxygène déterminée dans un mélange gazeux, de détecter un seuil de composition liée à la pression partielle d'oxygène et de mesurer la pression partielle d'oxygène dans un mélange gazeux.

Les sondes à oxygène présentent ou sont susceptibles de présenter de nombreuses applications dans l'industrie, notamment dans l'industrie chimique, l'industrie électronique, la conversion énergétique, le chauffage et la métallurgie.

Ainsi dans l'industrie chimique, ces sondes peuvent être utilisées pour signaler une présence anormale d'oxygène dans une atmosphère neutre.

Dans l'industrie électronique, certaines applications s'effectuent sous vide, de sorte que les sondes à oxygène peuvent détecter une fuite éventuelle ou une pression partielle d'oxygène trop élevée dans un vide résiduel.

Dans les centrales où l'on brûle du fuel, du gaz, etc., la combustion peut être contrôlée par une sonde à oxygène mise en contact des gaz brûlés. Le signal électrique donné par la sonde, sert, dans un processus de contre-réaction, à modifier l'admission du comburant (air) et du carburant. Cette application est aussi envisageable pour le chauffage collectif ou individuel.

Dans la métallurgie, la connaissance de la pression partielle d'oxygène lors des processus de fabrication, notamment dans les bains liquides, est souvent essentielle; on pourra de plus contrôler la pression partielle d'oxyde de carbone compte tenu

de l'équilibre:

$$CO + \frac{1}{2}O_2 \rightleftharpoons CO_2$$

L'application principale visée par l'invention est celle du réglage des combustions.

On peut souhaiter contrôler les combustions, soit pour réaliser des économies d'énergie, soit pour lutter contre la pollution. Selon le type d'équipement, on réalisera une sonde régulée en température qui permet une mesure précise de la pression partielle d'oxygène, soit on se contentera de détecter un seuil de composition comburant/carburant qui correspond à une variation importante de la pression partielle d'oxygène; dans ce cas, il n'est pas indispensable de réguler la température de la sonde qui peut d'ailleurs être chauffée par les gaz brûlés.

Pour les moteurs d'automobiles, le bon fonctionnement du pot d'échappement catalytique, destiné à lutter contre la pollution, impose d'admettre un mélange air/carburant particulier dit "stoechiométrique" (la quantité d'oxygène est juste suffisante pour brûler tout le carburant). Il est assez aisé de contrôler le réglage d'un moteur à la stoechiométrie, car la pression partielle d'oxygène, dans les gaz d'échappement à l'équilibre, varie brusquement en fonction du rapport air/carburant pour le mélange critique. Il faut souligner que l'utilisation d'un mélange stoechiométrique permet de consommer moins de carburant que le réglage actuel qui correspond à une carburation légèrement riche pour éviter les graves inconvénients mécaniques d'une carburation accidentellement appauvrie.

La variation de la conductivité électronique de certains oxydes en fonction de la pression partielle d'oxygène ($pO_2$) permet la mesure de celle-ci.

En effet, sous basse pression d'oxygène, les

atomes d'oxygène quittent l'oxyde, laissant par exemple une lacune d'oxygène (défaut atomique) et les deux électrons associés à chaque ion oxygène dans le solide; ces deux électrons conduisent le courant électrique et la conductibilité électronique $\sigma e$ est de la forme:

$$\log \sigma_e = A - \frac{1}{n} \log pO_2 - \frac{E}{kT}$$

dans laquelle A, k sont des constantes, n est un nombre entier égal à 4, 5, 6 selon les défauts, T est la température en degrés K (Kelvin) et E, est l'énergie d'activation.

L'oxyde de titane ($TiO_2$) et l'oxyde de cérium ($CeO_2$) présentent une conduction électronique du type précité.

Des effets de surface (chimisorption de molécules gazeuses en surface, piégeage d'électrons en surface par les molécules ou atomes chimisorbés, conduction de surface, modification des barrières de potentiel électrode métallique ou semi-conductrice/oxyde) peuvent se combiner à la conduction électronique de l'oxyde fonction de la pression d'oxygène pour donner une réponse de la résistance ou de la conduction électrique apparente de la pièce d'oxyde de cérium qui varie avec la pression d'oxygène; ces effets de surface seront d'autant plus importants que l'oxyde est sous forme de frittés poreux ou de couches minces.

La conduite de l'oxyde en fonction de la pression partielle d'oxygène, pour être satisfaisante, doit répondre aux trois critères suivants:

a) le temps de réponse de la condution à une variation de la pression d'oxygène doit être faible;

b) la conduction en fonction de la pression partielle d'oxygène ne doit pas présenter d'effet hystérésis;

c) pour certaines applications, notamment l'application automobile, l'oxyde doit être thermodynamiquement stable dans des conditions très réductrices (excès de carburant).

L'oxyde de titane de pureté égale à 99,5%, dès que la température n'est pas trop élevée (inférieure ou de l'ordre de 900°C) présente des effets d'hystérésis; d'autre part les phases de Magnéli ($Ti_nO_{2n-1}$) apparaissent sous atmosphère fortement réductrice.

Par contre, l'oxyde de cérium satisfait bien aux points b) et c) ci-dessus (il présente une stabilité thermodynamique remarquable liée à son diagramme de phase) (voir figure 1).

On remarque en effet sur ce diagramme, le domaine monophasé qui s'étend jusqu'à $CeO_{1,8}$ pour des températures un peu supérieures à 685°C. Ainsi par exemple, l'oxyde est stable à 800°C jusqu'à une pression partielle d'oxygène égale à $10^{-26}$ bar. L'existence d'un domaine biphasé au-dessous de 685°C ne présente pas d'inconvénient majeur.

L'utilisation de l'oxyde de cérium présente par conséquent des avantages par rapport à celle de l'oxyde de titane.

Cependant, l'oxyde de cérium n'a jamais été utilisé dans une sonde à oxygène, car cet oxyde est extrêmement cher lorsqu'il est pur et que par ailleurs, l'oxyde de cérium pur présente l'inconvénient d'être très fragile et de se fissurer facilement lorsqu'il est soumis à des traitements thermiques en atmosphère réductrice, telle que les gaz d'échappement des moteurs d'automobiles.

D'une manière générale, les sondes de type résistif ont un temps de réponse, à une variation de pression d'oxygène, plus long que les sondes de type électrolytique; ceci est un défaut des sondes de type

résistif auquel il faut remédier.

D'autre part, l'oxyde de cérium disponible dans le commerce et présentant une pureté moins bonne que 99,99% est inutilisable. En effet, les inventeurs ont constaté que l'oxyde 99,9 % présente sauf sous basse pression d'oxygène, une conductibilité en grande partie ionique indépendante de la pression de l'oxygène, de sorte qu'il n'est pas possible de mesurer la teneur en oxygène.

La pureté indiquée ci-dessus, est, conformément aux notices techniques des sociétés de produits chimiques, en % poids par rapport aux terres rares; c'est-à-dire que, par exemple, dans un produit $CeO_2$ à 99,9 % la quantité des autres terres rares est au maximum de 0,1% poids. La concentration totale des cations présents comme impuretés est généralement très notablement supérieure à 0,1% poids. Ainsi l'oxyde $CeO_2$ étudié par les inventeurs, de pureté 99,9% poids par rapport aux terres rares avait une pureté réelle de 99,66% poids et 98,3% titre. Les auteurs appellent % titre de nombre de cations cérium sur le nombre total de cations présents dans la poudre.

Le but de la présente invention est de remédier aux inconvénients précités.

Suivant l'invention, la sonde pour mesurer la teneur en oxygène d'un gaz comprenant au moins une pièce en oxyde de cérium et des moyens pour mesurer la conductivité ou la résistance électrique de cette pièce, est caractérisée en ce que l'oxyde de cérium de départ est de pureté commerciale courante et renferme essentiellement en tant qu'impuretés des cations d'éléments ayant un nombre d'oxydation inférieur à 4 qui induisent une conduction ionique notable, en ce que cet oxyde est dopé par un donneur, constitué par au moins un cation d'un élément présentant un nombre d'oxydation supérieur

à 4 et soluble dans l'oxyde de cérium, la concentration de cet élément étant suffisante pour que la conduction de l'oxyde soit essentiellement électronique et fonction de la pression partielle d'oxygène, cette concentration ne dépassant pas un certain seuil au-delà duquel la concentration des électrons mis en jeu lors de la conduction est égale à celle desdits cations (cas des cations pentavalents) et indépendante de la pression d'oxygène, et en ce que la concentration de ce cation donneur, est ajustée de manière que la variation de la résistance de la pièce d'oxyde de cérium ou sa conductivité, présente une variation importante avec la pression partielle d'oxygène dans le domaine de pression de mesure.

La pièce d'oxyde de cérium peut être en forme de bâtonnet, pastille, couche ou analogue.

Les inventeurs ont constaté que presque tous les cations présents comme impuretés dans l'oxyde de cérium possèdent un nombre d'oxydation inférieur à 4. Ces impuretés provoquent l'apparition d'une conduction ionique qui est indépendante de la pression de l'oxygène.

Les inventeurs ont établi que l'influence néfaste de ces impuretés peut être compensée par l'addition de cations d'éléments possédant un nombre d'oxydations supérieur à 4, tels que le tantale, le niobium, le molybdène, le tungstène, le vanadium, etc...

De préférence, l'élément ajouté est du tantale. Il a été constaté en effet que cet élément est facilement soluble dans l'oxyde de cérium.

Il a été constaté de façon surprenante qu'une faible quantité de $Ta_2O_5$ suffisait pour obtenir une conduction du "$CeO_2$ compensé" variant avec la pression d'oxygène. Ainsi, un oxyde de $CeO_2$ 98,3% titre dopé de 0,2% titre de Ta présente une conduction $\sigma$ du type:
$\text{Log}\ \sigma = -\frac{1}{5} \log pO_2 + \text{cst}$ pour $P_{O_2} \leq 10^{-4}$ bar à 900°C. Dans le domaine des pressions supérieures à $10^{-4}$ bar,

la variation de la conduction de l'oxyde avec la pression d'oxygène n'est plus assez rapide pour constituer une bonne sonde. Un dopage plus important en tantale, par exemple 1% titre, permet d'améliorer la variation de la conduction avec la pression d'oxygène pour $P_{O_2} \geq 10^{-4}$ bar:

$$\text{Log } \sigma = -\frac{1}{7} \text{ Log } pO_2 + \text{cst pour } 10^{-14} \text{ bar} \leq pO_2 \leq 1 \text{ bar}$$

$$\text{et Log } \sigma = -\frac{1}{5} \text{ Log } pO_2 + \text{cst pour } pO_2 \leq 10^{-14} \text{ bar à } 900°C.$$

On remarque que ce type de dopage est moins satisfaisant que celui à 0,2% titre dans le domaine de $pO_2$ qui s'étend de $10^{-4}$ bar à $10^{-14}$ bar; les inventeurs concluent que le dopage à 0,2% titre pour l'oxyde considéré, est le plus satisfaisant lorsque le domaine de mesure est inférieur à $10^{-4}$ bar.

La concentration du cation de cet élément ayant un nombre d'oxydation supérieur à 4, est suivant la pureté de l'oxyde de cérium et le domaine de pression d'oxygène que l'on désire couvrir, de préférence comprise entre 0,05% titre et 4% titre. Lorsque la concentration de l'élément ajouté est trop faible, l'influence des impuretés n'est pas suffisamment compensée et la conduction ionique de l'oxyde de cérium prédomine par rapport à la conduction électronique. Par ailleurs, lorsque la concentration de l'élément ajouté est trop forte, la concentration des électrons, mis en jeu lors de la conduction, risque de peu varier avec la pression d'oxygène ou même d'être constante ; dans ce dernier cas, la concentration des électrons de conduction est égale (cas d'un cation donneur pentavalent) à la concentration de l'élément ajouté rendant ainsi impossible la mesure de la pression d'oxygène. Une concentration d'élément ajouté trop forte, risque également de provoquer l'apparition d'une deuxième phase par dépassement de la limite de solubilité.

L'invention permet donc d'utiliser dans une

sonde à oxygène, de l'oxyde de cérium de pureté commerciale courante, relativement peu coûteux et qui est ainsi parfaitement compatible avec une production industrielle en grande série.

Il est également possible d'utiliser comme produit de départ un oxyde de cérium pur (par exemple 99,99% poids par rapport aux terres rares), en lui ajoutant 1% à 10% titre de cations (accepteurs) d'éléments présentant un nombre d'oxydation inférieur à 4 et 0,05% à 4% titre de cations d'éléments (donneurs) présentant un nombre d'oxydation supérieur à 4. La concentration des accepteurs peut être éventuellement augmentée jusqu'à leur limite de solubilité à condition que la concentration des donneurs croisse également et qu'ils soient solubles à des concentrations importantes dans le ternaire ainsi constitué.

A l'oxyde de cérium peut être ajouté, dans certaines proportions, des oxydes réfractaires tels que $ZrO_2$, $HfO_2$, etc... susceptibles de former une solution solide avec $CeO_2$ sans modifier notablement les propriétés électriques de $CeO_2$.

Les cations accepteurs peuvent être par exemple du sodium, calcium, strontium, yttrium, lanthane, néodyme, samarium, gadolinium, dysprosium ou ytterbium.

Il a été constaté de façon surprenante qu'un oxyde de cérium 99,9% poids compensé était beaucoup moins fragile que l'oxyde pur et que le temps de réponse à une variation de la pression d'oxygène était plus court. Les inventeurs considèrent que ces résultats sont probablement dus à la conduction ionique résiduelle provenant de la compensation imparfaite des impuretés; la présence de cations d'éléments ayant un nombre d'oxydation inférieur à 4 et supérieur à 4 aux joints de grains de la solution solide doit

également renforcer la résistance à la fissuration.

Pour obtenir un temps de réponse aussi court que possible, lors des variations de la pression d'oxygène, il est préférable que la pièce massive d'oxyde de cérium présente une porosité comprise entre 20 et 60% en volume de façon que les gaz puissent aisément diffuser à l'intérieur de l'oxyde de cérium.

Une forte porosité est souhaitable et peut être obtenue soit en utilisant une poudre à gros grains et/ou une faible température de frittage (900 - 1300°C), et/ou une faible durée de frittage, soit en additionnant à la poudre, avant compactage un produit que l'on pourra éliminer ultérieurement, par exemple un produit qui s'élimine par chauffage (exemple: carbonate d'ammonium, élimination par étuvage à 80°C, ou tout autre moyen (exemple: dissolution) sans altérer la conduction de l'oxyde de cérium.

Les inventeurs proposent également de diminuer le temps de réponse en mettant l'oxyde sous forme de couche suffisamment mince (0,1 à 500 microns).

D'autres particularités et avantages de l'invention apparaîtront encore dans la description ci-après.

Aux dessins annexés, donnés à titre d'exemples non limitatifs:

. la figure 1 est le diagramme de phase de l'oxyde de cérium, représentant en ordonnée la température en degrés centigrades et en abscisse le logarithme de la pression partielle d'oxygène en bar;

. la figure 2 est un diagramme représentant en ordonnée le logarithme de la conduction $\sigma$ en $(\Omega\ cm)^{-1}$ et en abscisse le logarithme de la pression partielle d'oxygène en bar, pour différents échantillons d'oxyde de cérium;

. la figure 3 est une vue schématique en

coupe longitudinale d'une première réalisation d'une sonde à oxygène conforme à l'invention;

. la figure 4 est une vue partielle en perspective et éclatée, montrant la disposition des constituants essentiels de la réalisation représentée à la figure 3;

. la figure 5 est une vue schématique en coupe longitudinale d'une seconde réalisation d'une sonde à oxygène conforme à l'invention;

. la figure 6 est une vue schématique en coupe longitudinale d'une troisième réalisation d'une sonde à oxygène conforme à l'invention;

. la figure 7 est une vue schématique en coupe longitudinale d'une quatrième réalisation d'une sonde à oxygène conforme à l'invention;

. la figure 8 est une vue de dos de la plaquette représentée sur la figure 7;

. la figure 9 est une vue schématique d'une autre disposition des éléments de mesure, fixés sur la plaquette représentée sur la figure 7;

. la figure 10 est une vue schématique d'une autre disposition des éléments de mesure, fixés sur la plaquette représentée sur la figure 7.

Sur le diagramme représenté à la figure 1, la zone hachurée représente le domaine biphasé de l'oxyde de cérium $CeO_n$ (n est un nombre inférieur à 2). Différents points correspondant à des valeurs de n égales à 1,78, 1,79, 1,80, 1,93, 1,955 et 1,96 sont représentés sur ce diagramme.

La zone non hachurée représente le domaine monophasé de $CeO_n$.

Pour augmenter la vitesse de la réaction entre l'oxygène et l'oxyde de cérium, il est avantageux de chauffer celui-ci à une température élevée. Selon le diagramme de la figure 1, on constate qu'il

existe entre 685 et 750°C un domaine dans lequel l'oxyde de cérium est stable jusqu'à une pression partielle d'oxygène égale à $10^{-27}$ atmosphère (ou bar). Il est donc avantageux de réaliser les mesures dans cette zone de température si on souhaite mesurer des $pO_2$ très faibles.

Sur le diagramme de la figure 2, on voit que les courbes $A_1$ et $A_2$ relatives à l'oxyde de cérium très pur (99,99% poids par rapport aux terres rares), sont sensiblement rectilignes, de sorte que le logarithme de la condution $\sigma$ est une fonction linéaire du logarithme de la pression d'oxygène ($pO_2$).

Les courbes $B_1$ et $B_2$ relatives à l'oxyde de cérium commercial de pureté égale à 99,9% poids par rapport aux terres rares, ne sont pas rectilignes, surtout dans le cas de la courbe $B_1$ réalisée à 750°C. Cette courbe $B_1$ présente dans un domaine où la pression en oxygène est supérieure à $10^{-8}$ bar, une partie où la conduction est sensiblement constante en fonction de la pression de l'oxygène, rendant ainsi impossible de mesurer la concentration de cet oxygène.

Les courbes $C_1$, $C_2$ et $C_3$ sont relatives à l'oxyde de cérium commercial qui a été compensé, conformément à l'invention par l'ajout de 0,2% titre de tantale sous forme de $Ta_2O_5$.

On voit que ces courbes sont sensiblement rectilignes et montrent comme dans le cas de l'oxyde de cérium pur une variation linéaire du logarithme de la conduction $\sigma$ en fonction du logarithme de la pression d'oxygène. Les courbes $C_1$ et $C_2$ montrent que la conduction reste sensiblement constante aux fortes concentrations d'oxygène, ce qui indique que l'ajout du tantale n'est pas tout à fait suffisant pour compenser l'influence des impuretés, dans cette zone de concentration. Ces courbes montrent néanmoins l'influence

favorable de l'ajout du tantale.

On donne ci-après à titre d'exemple non limitatif le mode opératoire pour obtenir un oxyde de cérium ayant au départ une pureté de 99,9% poids par rapport aux terres rares (98,3% titre de Ce par rapport à l'ensemble des cations) et auquel on a ajouté 0,2% titre de tantale sous la forme de $Ta_2O_5$.

A cet effet, il faut réaliser une mise en solution solide du tantale dans l'oxyde de cérium puis fritter l'échantillon obtenu. Le mode opératoire est le suivant:

1. Préparation d'une solution solide d'oxyde de cérium commercial à 95% mole et de $Ta_2O_5$ à 2,5% mole.

a) Mélange intime de poudre d'oxyde de cérium et d'oxyde de tantale dans les proportions 95% et 2,5% en mole.

b) Chauffage aux températures successives indiquées ci-après avec broyage au mortier d'agate entre les différentes opérations:

900°C pendant 12 heures;
1200°C pendant 5 heures; et
1400°C pendant 15 heures.

Le produit obtenu est légèrement bleuté.

2. Préparation d'une solution solide d'oxyde de cérium à 99,8% et d'oxyde de tantale à 0,1% mole.

a) Mélange dans les proportions de 96% et 4% en mole, de poudre d'oxyde de cérium et de la poudre précédemment préparée au paragraphe 1 ci-dessus.

b) Chauffage et broyage selon le processus indiqué au paragraphe 1b) ci-dessus. Le produit obtenu est légèrement rose.

3. Pressage et frittage.

a) Introduction éventuelle du carbonate

d'ammonium pour augmenter la porosité du fritté.

b) Pressage hydrostatique à 3 tonnes par $cm^2$.

c) Chauffage à l'étuve à 80°C pour éliminer le carbonate d'ammonium.

d) Frittage entre 900 et 1400°C. Par exemple montée en température à 1400°C en 15 heures; maintien à 1400°C pendant 5 heures; descente en température en 15 heures.

On peut également effectuer le frittage à plus basse température, par exemple à 1200°C pour augmenter sa porosité.

Pour déterminer sa résistance au vieillissement, l'échantillon d'oxyde de cérium préparé conformément au mode opératoire précité a été soumis aux cycles de traitements suivants:

. à 900°C, oxydation-réduction à une pression comprise entre 1 bar et $10^{-18}$ bar, par modification progressive ou brutale de la pression d'oxygène;

. dans l'air, chauffage et refroidissement de 20 à 900°C, dans une atmosphère de CO, $CO_2$ à 30% de CO, refroidissement de 900°C à 200°C et chauffage dans l'air.

La stabilité thermodyhamique, la reproductibilité des mesures électriques et la résistance mécanique se sont avérées excellentes. L'échantillon d'oxyde de cérium dopé conformément à l'invention répond beaucoup plus vite qu'un échantillon de $TiO_2$ aux changements brutaux de pression partielle d'oxygène.

Sur les figures 3 à 10, on a représenté à titre d'exemples non limitatifs, quelques réalisations concrètes de sondes à oxygène conformes à l'invention.

Dans l'exemple des figures 3 et 4, la sonde comprend un boîtier extérieur 1 comportant des entrées 2 et des sorties 3 du gaz dont on veut déterminer la teneur en oxygène. Ce boîtier 1 renferme deux pastilles 4, 5 en forme de disque, en oxyde de cérium préparé

conformément à l'invention, superposées et placées entre deux barreaux 6, 7 de support en matière isolante et réfractaire, telle que l'alumine.

Une résistance chauffante 8, 9 faisant également office d'électrode est placée entre chaque barreau 6, 7 et la pastille 4, 5 adjacente en oxyde de cérium. De plus, un thermocouple 10 est disposé entre ces deux pastilles 4, 5 pour mesurer la température de celles-ci.

Par ailleurs, la face des pastilles 4, 5 qui est en contact avec la résistance 8, 9 est recouverte d'une couche de platine 11 (voir figure 4).

La conduction ou la variation de la conduction des pastilles 4, 5 en oxyde de cérium est mesurée entre les deux résistances 8, 9. Le chauffage de ces deux pastilles 4, 5 est effectué sous tension alternative et la mesure de la conduction (ou de la résistance) est faite en courant continu.

Dans la réalisation de la figure 5, un barreau 12 en oxyde de cérium, placé dans un boîtier 13 présente deux extrémités 12a, 12b recouvertes d'une couche en platine reliées à des électrodes 14, 15. La partie centrale du barreau 12 est en contact avec un thermocouple 16.

Par ailleurs, le barreau 12 est placé horizontalement dans un four constitué par un manchon en alumine 17 autour duquel est enroulée une résistance chauffante 17a.

Dans le cas de la figure 6, la sonde à oxygène comprend un bâtonnet en oxyde de cérium 18 placé dans l'axe du boîtier 19. Ses extrémités opposées sont également recouvertes d'une couche en platine 18a, 18b et sont en contact respectivement avec une électrode 20 et un thermocouple 21, qui sert également d'électrode, logé dans des tubes en alumine 22, 23. Deux autres

électrodes 24, 25 sont en contact avec le bâtonnet 18, entre ses extrémités opposées 18a, 18b.

Le bâtonnet 18 est entouré axialement par un manchon en alumine 26 autour duquel est enroulée une résistance de chauffage 27. La face intérieure de ce manchon 26 est revêtue d'une couche de platine 28 qui permet de réaliser l'équilibre thermodynamique des gaz pénétrant à l'intérieur du boîtier 19; ce platinage peut être effectué dans les autres montages (figures 3 et 7 sur la face interne des boîtiers 1 et 32, figure 5 sur la face interne du manchon 17).

Dans la réalisation de la figure 7, une couche d'oxyde de cérium 30 d'épaisseur comprise entre 0,1 et 500 microns est déposée sur une plaquette 31 en matière isolante réfractaire telle que l'alumine. Cette plaquette 31 est placée à l'intérieur d'un boîtier 32. Le dépôt de cette couche 30 peut être réalisé par exemple par évaporation à canon d'électrons, par sérigraphie,par pulvérisation cathodique ou par dépôt direct en utilisant une pâte composée de poudre d'oxyde de cérium liée par exemple par du collodion, qui est ensuite frittée à une température comprise entre 900°C et 1500°C.

La couche d'oxyde de cérium 30 recouvre partiellement une électrode en platine 33 qui est déposée sur la plaquette 31 par exemple par pulvérisation cathodique ou par sérigraphie, ou au pinceau en utilisant une pâte de platine; l'électrode 33 peut s'étendre sous presque toute la surface de la couche 30 pour faciliter l'accrochage de cette dernière sur la plaquette d'alumine. Une autre électrode de platine 34 déposée par la même technique, recouvre partiellement la couche d'oxyde de cérium 30, de sorte que celle-ci est prise en sandwich entre les deux électrodes. Un thermocouple 35 est appliqué sous forme de filament sur la plaquette 31. Au dos de la plaquette 31 (voir figure 8) est

appliquée par exemple par sérigraphie, une résistance chauffante 36.

Dans l'exemple de la figure 9, la couche d'oxyde de cérium est déposée sous forme de couche mince (40) d'épaisseur comprise entre 0,1 et 500 microns sur la plaquette (31). Le courant est amené par deux électrodes de platine (38, 39) déposées sous forme de couches minces sur la plaquette (31).

Sur la figure 9, l'écart (43) entre les deux électrodes, qui délimite la partie de la couche qui intervient dans la définition de la résistance, est de l'ordre du mm. Cet écart peut être plus important, de l'ordre de 20 mm par exemple. La température de la plaquette (31) est mesurée par un thermocouple (37), éventuellement sérigraphié. Les électrodes (38, 39) sont prolongées par des fils métalliques réfractaires (41,42).

Dans l'exemple de la figure 10, la couche de cérium est déposée sous forme de couche mince (49) d'épaisseur comprise entre 0,1 et 500 microns sur une plaquette (31). Le courant est amené par les deux électrodes (45, 48) et la différence de potentiel est prise par les électrodes (46, 47). Ces quatre électrodes sont en platine et sont déposées sous forme de couches minces sur la plaquette 31. Sur la figure 10, les écarts (51, 52, 53) entre électrodes sont de l'ordre du mm. Les écarts peuvent être beaucoup plus importants. La température de la plaquette de réfractaire est mesurée par un thermocouple (44), éventuellement sérigraphié.

Les montages décrits sur les figures 9 et 10 sont particulièrement intéressants, lorsque les deux caractéristiques suivantes sont respectées:

. les électrodes (38, 39, 45, 46, 47, 48) sont disposées entre la couche d'oxyde et la plaquette de réfractaire (31) pour permettre un bon accrochage de la couche d'oxyde et une surface de contact oxyde-gaz maximum.

. les écarts (43, 53, 52, 51) entre électrodes sont faibles de l'ordre du mm de manière à permettre une bonne fixation de la couche d'oxyde et abaisser la résistance électrique que présente cette dernière.

Bien entendu, l'invention n'est pas limitée aux exemples que l'on vient de décrire et on peut apporter à ceux-ci de nombreuses modifications sans sortir du cadre de l'invention, notamment supprimer les résistances chauffantes et/ou le thermocouple.

Ainsi, la sonde à oxygène de type résistif électronique, conforme à l'invention, présente de nombreux avantages par rapport aux sondes actuellement connues et notamment par rapport aux sondes de type (électrolytique) ionique à effet de pile:

. domaine de mesure de pression d'oxygène très étendu du côté des basses pressions d'oxygène ($10^{-27}$ bar) ce qui n'est pas le cas des sondes de type électrolytique en raison de l'apparition dans des conditions très réductrices de conduction électronique parasite;

. simplicité et moindre coût;

. miniaturisation aisée par la technique des couches minces;

. réponse rapide grâce à la mise en oeuvre de frittés poreux ou de couches minces;

. meilleure résistance aux chocs thermiques.

REVENDICATIONS

1. Sonde pour mesurer la teneur en oxygène d'un gaz comprenant au moins une pièce en oxyde de cérium et des moyens pour mesurer la conductivité ou la résistance électrique de cette pièce, caractérisée en ce quel'oxyde de cérium de départ est de pureté commerciale courante et renferme essentiellement en tant qu'impuretés des cations d'éléments ayant un nombre d'oxydation inférieur à 4 qui induisent une conduction ionique notable, en ce que cet oxyde est dopé par un donneur, constitué par au moins un cation d'un élément présentant un nombre d'oxydation supérieur à 4, la concentration de cet élément étant suffisante pour que la conduction de l'oxyde soit essentiellement électronique et fonction de la pression partielle d'oxygène, cette concentration ne dépassant pas un certain seuil au-delà duquel la concentration des électrons mis en jeu lors de la conduction est égale ou proportionnelle à celle desdits cations et indépendante de la pression d'oxygène, et en ce que la concentration de ce cation donneur est ajustée de manière que la variation de la résistance de la pièce d'oxyde de cérium ou sa conductivité, présente une variation importante avec la pression partielle d'oxygène dans le domaine de pression de mesure.

2. Sonde conforme à la revendication 1 , caractérisée en ce que la concentration du ou des cations donneurs n'est pas trop élevée de manière à laisser subsister une conduction ionique résiduelle qui permette une réponse rapide aux variations de pression d'oxygène et une bonne résistance aux cycles d'oxydo-réduction.

3. Sonde conforme à l'une des revendications 1 ou 2, l'oxyde de cérium utilisé étant de pureté 99,9% poids par rapport aux terres rares, caractérisée en ce que le titre du ou des cations ajoutés, ayant un nombre d'oxydation supérieur à 4, est comprise entre 0,05% et 4%.

4. Sonde pour mesurer la teneur en oxygène d'un gaz comprenant au moins une pièce en oxyde de cérium et des moyens pour mesurer la conductivité ou la résistance électrique de cette pièce, caractérisée en ce que l'oxyde de cérium de départ est sensiblement pur, en ce que cet oxyde est additionné de cations d'éléments ayant un nombre d'oxydation inférieur à 4 susceptibles d'induire une conduction au moins partiellement ionique, et en ce que cet oxyde est additionné par un donneur, constitué par au moins un cation d'un élément présentant un nombre d'oxydation supérieur à 4, la concentration de cet élément étant suffisante pour que la conduction de l'oxyde soit essentiellement électronique et fonction de la pression partielle d'oxygène, cette concentration ne dépassant pas un certain seuil au-delà duquel la concentration des électrons mis en jeu lors de la conduction est égale ou proportionnelle à celle desdits cations et indépendante de la pression d'oxygène, et en ce que la concentration de ce cation donneur est ajustée de manière que la variation de la résistance de la pièce d'oxyde de cérium ou sa conductivité, présente une variation importante avec la pression partielle d'oxygène dans le domaine de pression de mesure.

5. Sonde conforme à la revendication 4, caractérisée en ce que les cations accepteurs sont choisis parmi les éléments suivants: sodium, calcium, strontium, yttrium, lanthane, néodyme, samarium, gadolinium, dysprosium, ytterbium.

6. Sonde conforme à l'une des revendications 1 à 5, caractérisée en ce que ledit élément ayant un nombre d'oxydation supérieur à 4 est du niobium ou du tantale.

7. Sonde conforme à l'une des revendications 1 à 6, caractérisée en ce que l'oxyde de cérium est additionné d'oxydes réfractaires, contenant des cations

de nombre d'oxydation égal à 4, tels que $ZrO_2$, $HfO_2$, $ThO_2$, etc... susceptibles de former une solution solide avec $CeO_2$ sans modifier notablement les propriétés électriques de ce dernier.

8. Sonde conforme à l'une des revendications 1 à 7, caractérisée en ce que l'oxyde de cérium est obtenu par frittage d'une poudre à gros grains, de façon à obtenir une forte porosité.

9. Sonde conforme à l'une des revendications 1 à 8, caractérisée en ce que l'oxyde fritté a une porosité comprise entre 20 et 60% en volume, cette porosité ayant été obtenue par adjonction avant compactage de la poudre d'un produit qui a été ensuite éliminé, l'adjonction de ce produit ne modifiant pas les propriétés électriques de l'oxyde.

10. Sonde conforme à l'une des revendications 1 à 9, caractérisée en ce qu'elle comprend au moins une couche d'oxyde de cérium (30, 40, 49) accrochée sur une plaquette de réfractaire isolant (31) par l'intermédiaire d'une ou plusieurs couches de platine (33, 38, 39, 46, 47, 48, 45).

11. Sonde conforme à l'une des revendications 1 à 10, caractérisée en ce qu'elle comprend au moins une pièce d'oxyde de cérium (4, 5, 12, 18, 30, 40, 49) contenue à l'intérieur d'un boîtier (1, 32) ou d'un manchon chauffant (17, 26) et que la face intérieure de ces boîtiers (1, 32) ou de ces manchons chauffants (17, 26) est revêtue d'une couche de platine.

12. Sonde conforme à l'une des revendications 1 à 11, caractérisée en ce qu'elle comprend des moyens pour mesurer la température et pour chauffer la pièce d'oxyde de cérium à une température comprise entre 685°C et 800°C.

13. Sonde conforme à l'une des revendications 1 à 12, caractérisée en ce qu'elle comprend un boîtier

extérieur (1, 13, 19, 32) comportant une entrée (2) et une sortie (3) du gaz à analyser, des moyens (6, 7, 17, 14, 15, 22, 23, 31) pour supporter la pièce d'oxydes à l'intérieur du boîtier, éventuellement une résistance chauffante (8, 9, 17a, 27, 36) pour chauffer ladite pièce, éventuellement un thermocouple (10, 16, 21, 35, 37, 44) également en contact thermique avec cette pièce et au moins deux électrodes (8, 9, 14, 15, 20, 21, 24, 25, 33, 34, 38, 39, 45, 46, 47, 48) pour mesurer sa conductivité ou sa résistance.

14. Sonde conforme à la revendication 13 , caractérisée en ce qu'elle comprend deux pastilles (4, 5) d'oxyde de cérium disposées entre deux supports (6, 7) en matière réfractaire et isolante, une résistance chauffante (8, 9) placée entre chaque support de la pastille d'oxyde de cérium et un thermocouple (10) disposé entre ces deux pastilles.

15. Sonde conforme à la revendication 13, caractérisée en ce que la pièce d'oxydes (12, 18, 30, 40, 49) est entourée par un manchon (17, 26) en matière réfractaire et isolante, autour duquel est enroulée une résistance chauffante (17a, 27).

16. Sonde conforme à la revendication 13, caractérisée en ce que la pièce d'oxydes (30, 40, 49) est sous forme de couche mince d'épaisseur comprise entre 0,1 et 500 microns disposée sur une plaquette (31) en matière isolante et réfractaire, en ce qu'un thermocouple (35, 37, 44) éventuellement sérigraphié, est en contact thermique avec la plaquette (31) et en ce que la face de cette plaquette opposée à la couche d'oxydes (30, 40, 49) comporte une résistance chauffante (36) déposée par sérigraphie sur cette face.

17. Sonde conforme à l'une des revendications 10 ou 16, caractérisée en ce que la couche d'oxyde (30) de cérium est comprise entre deux électrodes de

platine (33, 34) également déposées sous forme de couches minces sur ladite plaquette (31) et en ce que l'accrochage sur la plaquette (31), de la couche d'oxyde de cérium (30) est réalisé par l'intermédiaire de l'électrode (33).

18. Sonde conforme à la revendication 16, caractérisée en ce qu'aux deux extrémités de la couche d'oxyde de cérium (40) sont déposées sur ladite plaquette deux électrodes en platine (38, 39) sous forme de couches minces.

19. Sonde conforme à la revendication 16, caractérisée en ce que quatre électrodes de platine (45, 46, 47, 48) sont au contact de cette couche d'oxyde de cérium et sont déposées sous forme de couches minces sur ladite plaquette (31).

20. Sonde conforme à l'une des revendications 10 ou 16, caractérisée en ce qu'elle comprend deux électrodes (38, 39) en couche de platine déposées, sur la plaquette (31), de manière à présenter entre elles un faible écart (43) de l'ordre du mm et une couche (40) d'oxydes recouvrant la zone comprise (43) entre les deux électrodes (39, 38) ainsi qu'une partie de ces dernières.

21. Sonde conforme à l'une des revendications 10 ou 16, caractérisée en ce qu'elle comprend quatre électrodes (46, 47, 48, 45) en couche de platine, parallèles, déposées sur la plaquette (31) de manière à présenter entre elles de faibles écarts (51, 53, 52) de l'ordre du mm et une couche d'oxydes (49) recouvrant partiellement les quatre électrodes (45, 46, 47, 48).

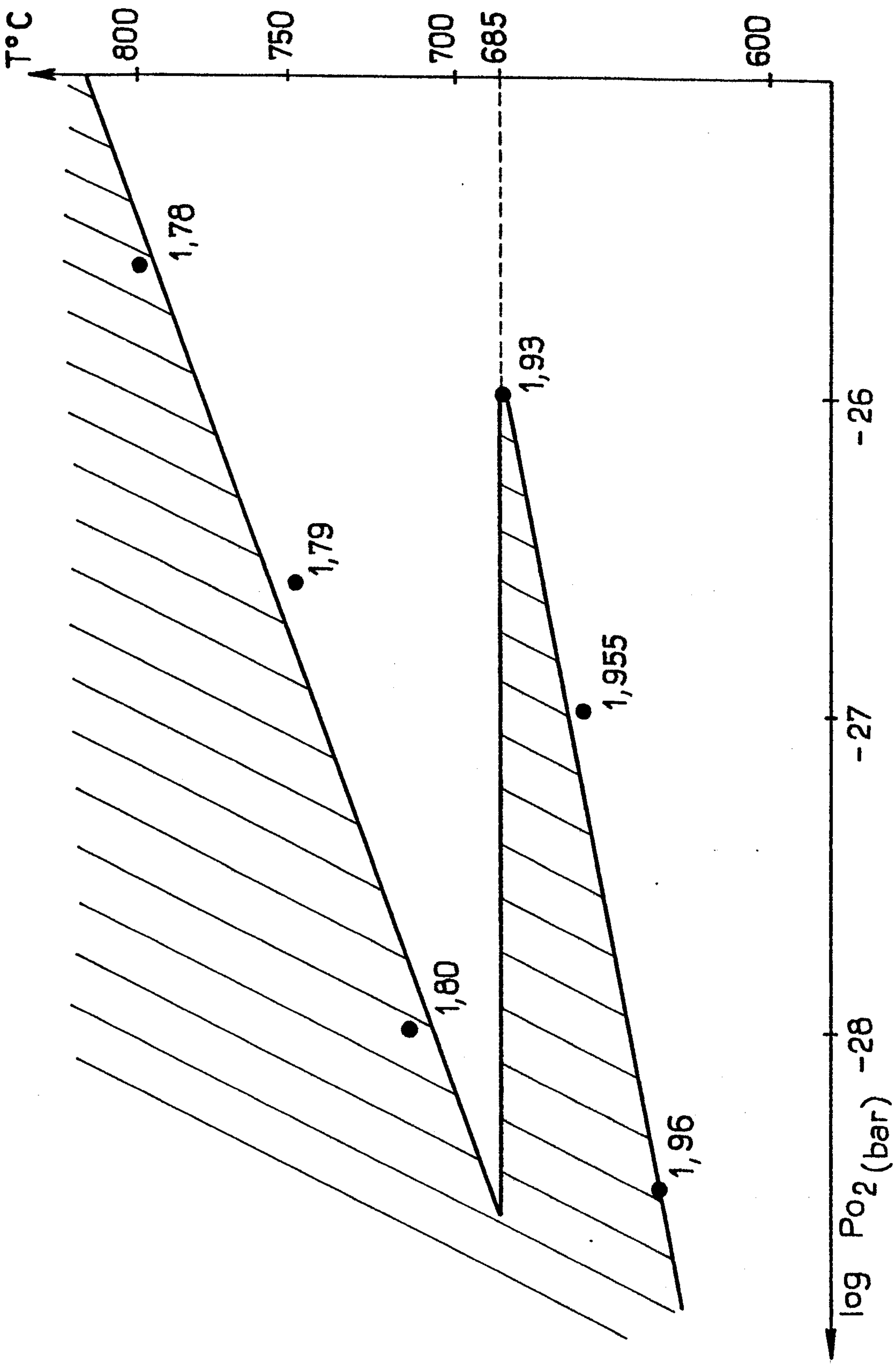

T°C
800
750
700
685
600
1,78
1,79
1,80
1,93
1,955
1,96
-26
-27
-28
log Po2 (bar)


FIG.1

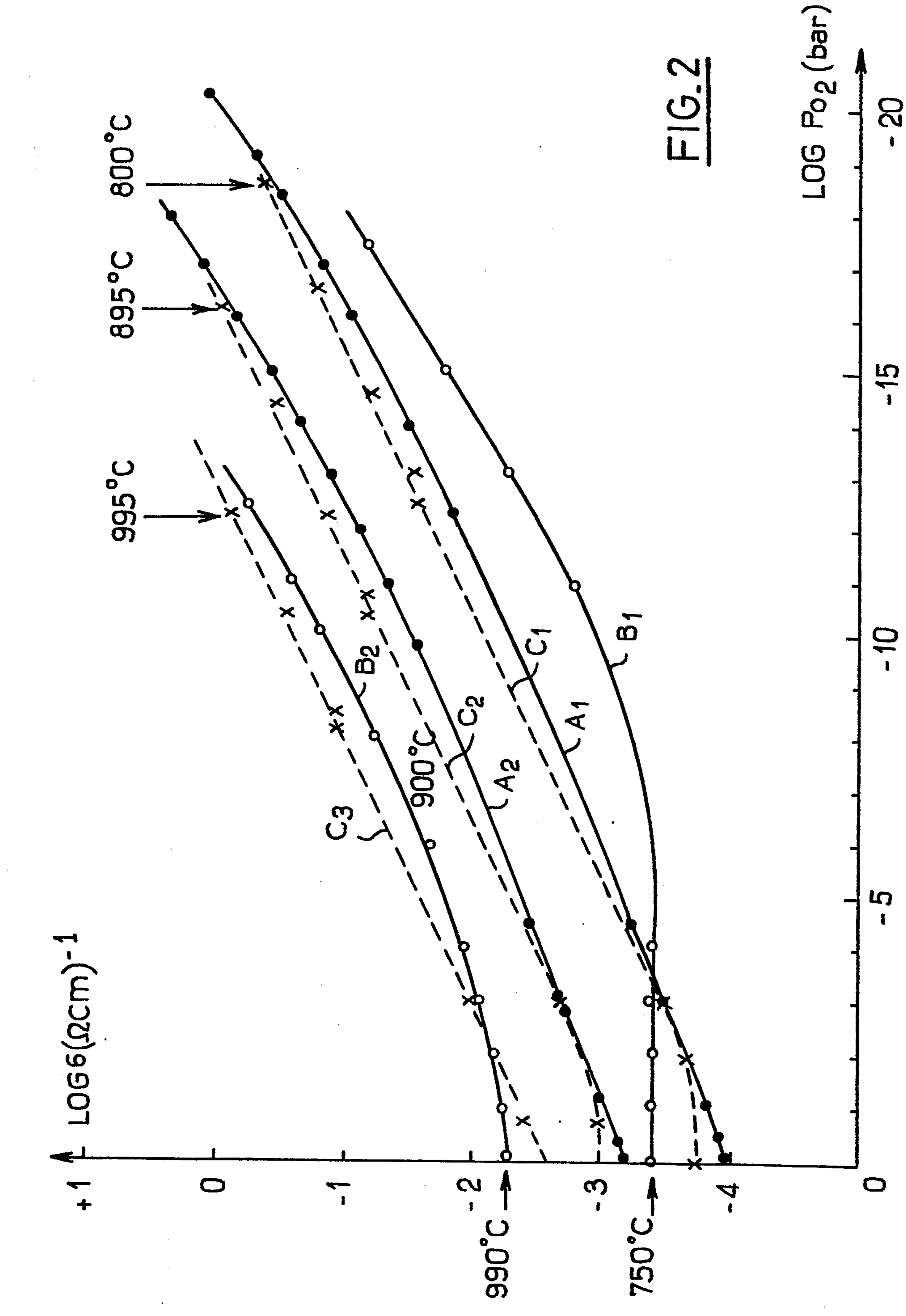
LOGσ(Ωcm)^-1
+1
0
-1
-2
-3
-4
990°C
750°C
LOG $P_{O_2}$ (bar)
0
-5
-10
-15
-20
995°C
895°C
800°C
900°C
$A_1$
$B_1$
$C_1$
$A_2$
$B_2$
$C_2$
$C_3$

FIG.2

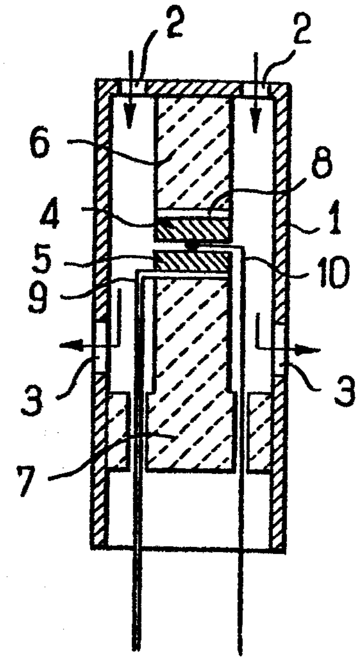


FIG_3

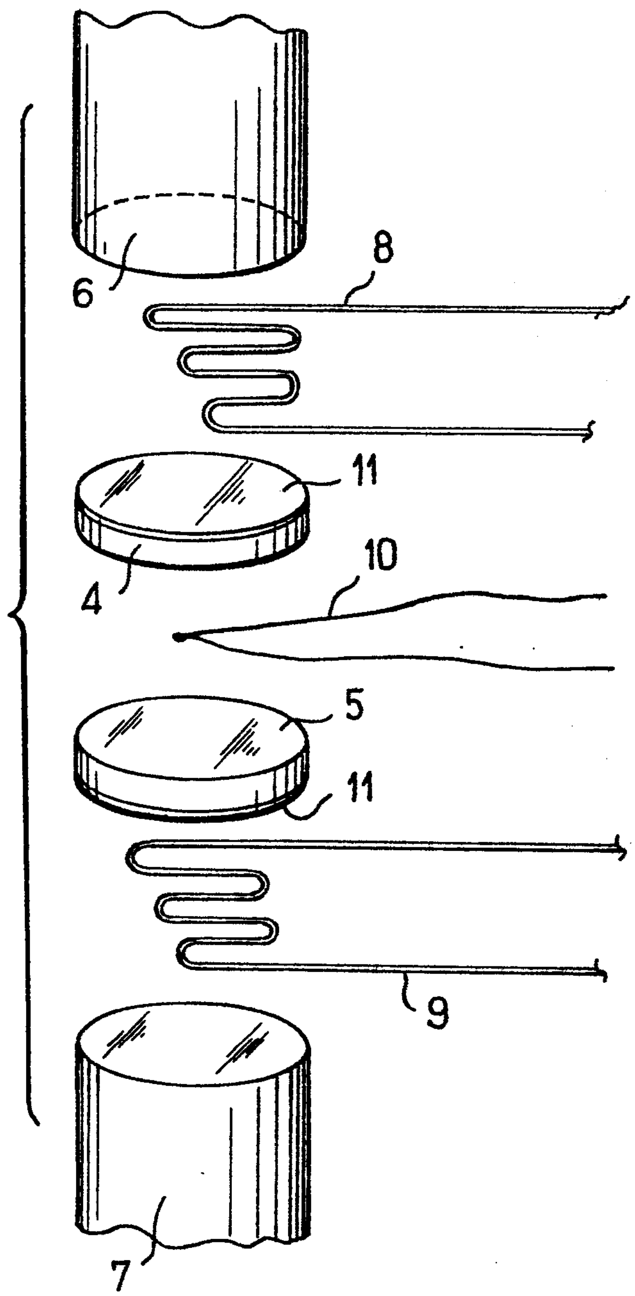


FIG_4

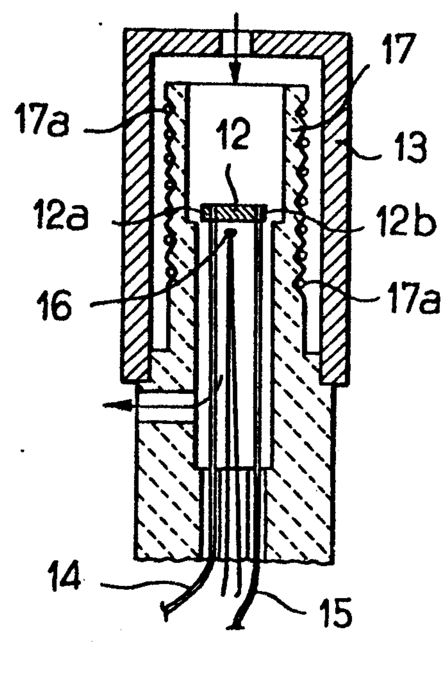


FIG_5

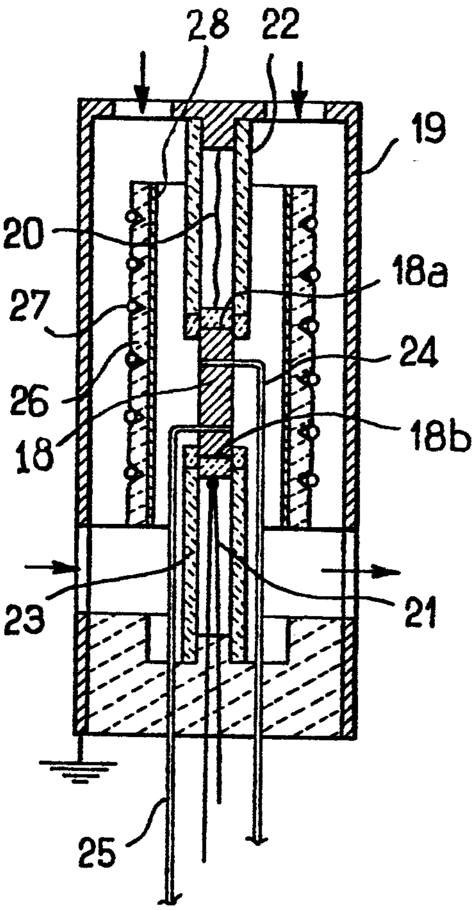


FIG_6

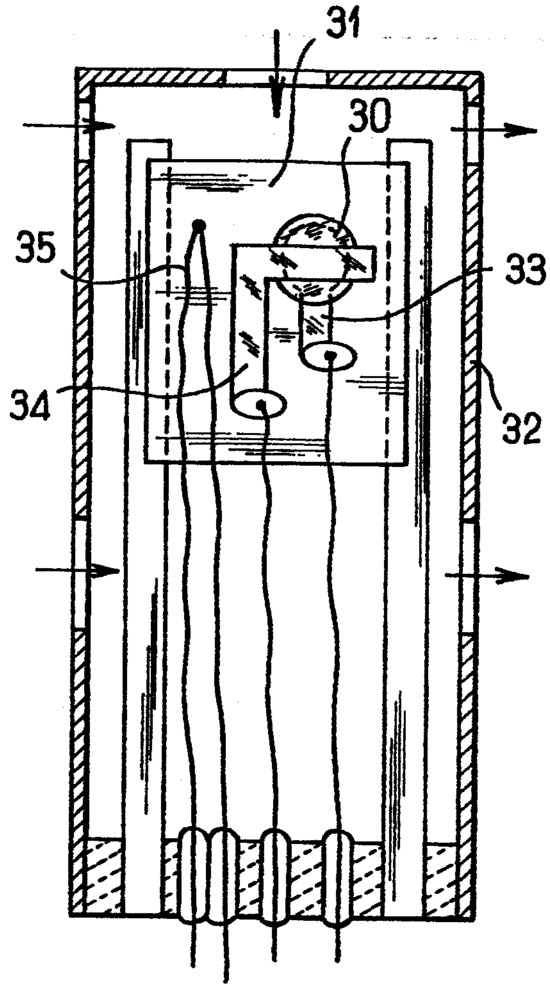


FIG_7

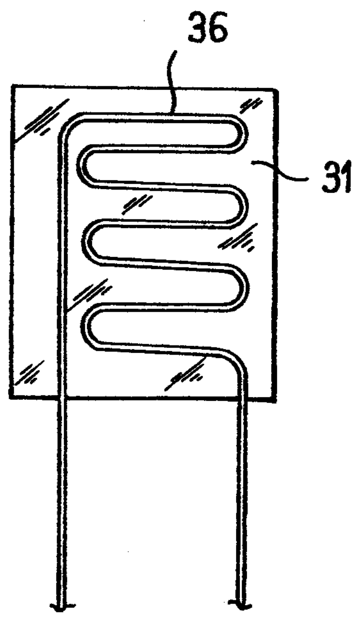


FIG_8

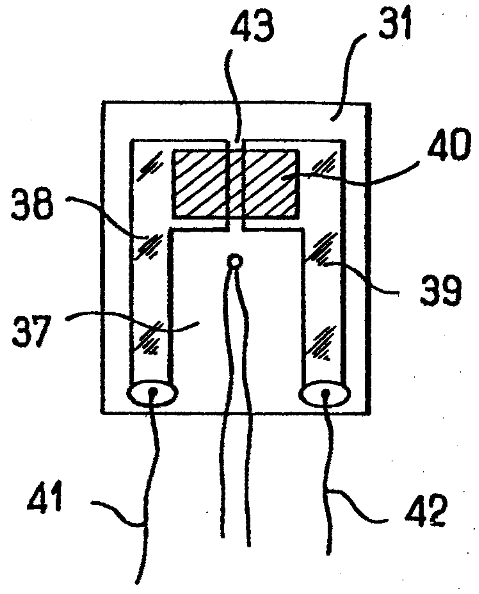


FIG_9

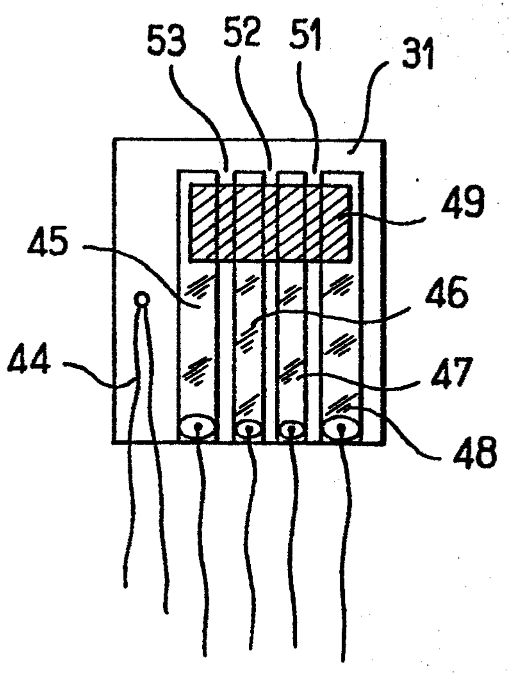


FIG_10

Office européen des brevets

**RAPPORT DE RECHERCHE EUROPEENNE**

Numéro de la demande 0208591

EP 86 40 1358

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int Cl.4) |
| A | FR-A-2 385 096 (RENAULT) * Page 1, ligne 36 - page 3, ligne 8; page 5, ligne 6 - page 6, ligne 2 * --- | 1-7 | G 01 N 27/12 |
| A | EP-A-0 101 249 (HITACHI) * Page 7, ligne 23 - page 8, ligne 5; page 8, ligne 21 - page 9, ligne 3; page 11, ligne 16 - page 12, ligne 6; page 14, ligne 3 - page 15, ligne 2; page 18, ligne 5 - page 20, ligne 15; figures * --- | 1-4,6, 10,12-14,16-18 | |
| A | FR-A-2 282 635 (PHILIP'S) * Page 3, ligne 3 - page 4, ligne 16; page 6, lignes 7-9 * --- | 1-4,14,17,18 | DOMAINES TECHNIQUES RECHERCHES (Int. Cl.4) |
| A | GB-A-1 460 746 (MASLEN) * En entier * --- | 1-4 | G 01 N |
| A | US-A-4 500 412 (TAKAHASHI) * En entier * --- -/- | 1,2,4, 10,12, 16-21 | |

Le present rapport de recherche a ete etabli pour toutes les revendications

| Lieu de la recherche | Date d'achèvement de la recherche | Examinateur |
|---|---|---|
| LA HAYE | 23-09-1986 | LEMERCIER D.L.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82

Office européen des brevets

# RAPPORT DE RECHERCHE EUROPEENNE

Numero de la demande

EP 86 40 1358

## DOCUMENTS CONSIDERES COMME PERTINENTS



| Catégorie | Citation du document avec indication, en cas de besoin, des parties pertinentes | Revendication concernee | CLASSEMENT DE LA DEMANDE (Int Cl 4) |
|---|---|---|---|
| A | US-A-4 225 634 (TANAKA) * Colonne 3, lignes 1-46; colonne 2, lignes 53-68; colonne 6, lignes 39-45 * | 1,4,17 | |
| | --- | | |
| A | GB-A-2 005 025 (BENDIX) * En entier * | 1,4 | |
| | --- | | |
| A | US-A-3 911 386 (BEAUDOIN) * Colonne 2, lignes 26-43; colonne 5, ligne 16 - colonne 6, ligne 49; figure 2 * | 8-10, 12-14 | |
| | --- | | |
| A | US-A-4 469 626 (TUOHIG) * En entier * | 10,12-14,16-18,20 | |
| | --- | | DOMAINES TECHNIQUES RECHERCHES (Int Cl 4) |
| A | US-A-4 377 801 (WEBER) * Colonne 2, ligne 44 - colonne 3, ligne 36 * | 13,16-18 | |
| | --- | | |
| A | US-A-3 936 794 (BEAUDOIN) * Colonne 4, lignes 3-49 * | 11,15 | |
| | ----- | | |

Le present rapport de recherche a été établi pour toutes les revendications

| Lieu de la recherche | Date d achèvement de la recherche | Examinateur |
|---|---|---|
| LA HAYE | 23-09-1986 | LEMERCIER D.L.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82